# EUROPEAN PATENT SPECIFICATION

(11) **EP 2 763 865 B1**
(45) Date of publication and mention of the grant of the patent: **30.08.2017**
(21) Application number: 11818948.9
(22) Date of filing: 03.10.2011
(51) Int. Cl.: B60H 1/00, B60H 1/32

(54) **TRUCK WITH A REFRIGERATED COMPARTMENT**
LASTKRAFTWAGEN MIT EINEM KÜHLFACH
CAMION AVEC UN COMPARTIMENT RÉFRIGÉRÉ

(43) Date of publication of application: 13.08.2014
(73) Proprietor: VOLVO LASTVAGNAR AB, 405 08 Göteborg (SE)
(72) Inventor: BOUCHET, Benoit, 69970 Chaponnay (FR)
(74) Representative: Faucheux, Jérôme
(86) International application number: PCT/IB2011/002679
(87) International publication number: WO 2013/050800

(56) References cited:
- EP-A2- 1 593 918
- WO-A1-2009/153515
- GB-A- 2 437 828
- US-A- 3 304 739

## Description

### TECHNICAL FIELD OF THE INVENTION

The invention relates to a truck with a refrigerated compartment, equipped with a dedicated refrigerating system, and a driver cabin.

### BACKGROUND OF THE INVENTION

Many vehicles, including trucks are now equipped with air conditioning units which allow cooling down the air in the vehicle cabin. When trucks are stopped with the engine shut down, the driver of the truck cannot activate the air conditioning system of the truck if it is powered by the engine. Therefore, if the truck is parked in a warm place, the cabin of the truck can become uncomfortable for the driver. In any case, vehicle air conditioning units require a substantial amount of energy to cool down the cabin of a truck. This is even more true due to the fact that these refrigerating units need to be of a comparatively small size and should not be too expensive, so that in many cases their inherent efficiency is not optimum.

Trucks equipped with a refrigerated compartment, which can be mounted on the truck itself or in a trailer or semi-trailer, are usually equipped with a refrigerating system dedicated to the refrigerated compartment. Due to the much higher cooling power required for refrigerating the refrigerated compartment, these refrigerating systems are usually much more bulky than conventional vehicle air conditioning units. The vast majority of such refrigerating systems are of the vapor compression type (also called of the closed loop type) where a refrigerant flows in closed cycle circuit comprising a compressor, a condenser, an expander and evaporator. Systems for refrigerating big compartments may comprise a dedicated internal combustion engine. Nevertheless, other systems exist which are based on an mere open loop expansion of pre-compressed fluid such as nitrogen or carbon dioxide store under high pressure in a dedicated reservoir, such as described in EP-1 659 355. In any case, the temperature of the refrigerated compartment is maintained at a substantially constant value, at any time, by the refrigerating system, which is independent from the air conditioning system of the cabin of the truck if the cabin is so equipped.

As the temperature of refrigerated compartments is much lower than the temperature required in the cabin for the comfort of the driver, the refrigerating system of the compartment can be used to control the temperature of the cabin without influencing too much the temperature in the refrigerated compartment. To this end, it is known from DE-A-101 42 546 to use a heat exchanger installed in the refrigerated compartment to refresh an air flow coming from the cabin. This refreshed air flow is then sent back and blown into the cabin. The system has a single air to air heat exchanger where the air of the cabin and the air of the refrigerated compartment can exchange heat. Such an approach does not require the use of a dedicated cabin refrigeration system.

This technique needs ducts of a large diameter running from the cabin to the refrigerated compartment to obtain enough air flow, which may prove to be not convenient when the refrigerated compartment is carried by a trailer or a semi-trailer which exhibits ample movements with respect to the cabin when the vehicle is operated. Moreover, the air/air heat exchanges do not provide a satisfying efficiency and carrying low thermal energies by air induces relatively high energy losses. EP 1 593 818 A2 discloses a cooling system for two cooling chambers. A heat exchanger is provided in each cooling chamber. The heat exchangers are connected via a cooling circuit to a tank which supplies heat exchangers with a refrigerating fluid.

### SUMMARY OF THE INVENTION

This invention aims at proposing a truck having a refrigerating compartment equipped with a dedicated refrigerating system and a driver cabin, which allows refreshing the cabin with low energy consumption.

To this end, the invention concerns a truck comprising a driver cabin having a cabin air cooling exchanger adapted to cool an air flow directed to the cabin, and comprising a refrigerated compartment equipped with a dedicated open loop refrigerating system, wherein the open loop refrigerating system comprises a compressed refrigerating fluid tank, means to direct the compressed refrigerating fluid to a compartment heat exchanger inside the refrigerating compartment and an outlet to ambient air for releasing the refrigerant fluid, wherein the truck further comprises means to direct at least a portion of the refrigerating fluid which has circulated in the compartment heat exchanger to the driver cabin for performing air conditioning, before the refrigerating fluid gets released to the ambient air, wherein the cabin comprises a heat transfer circuit circulating a heat transfer fluid between the cabin air cooling exchanger and an intermediate exchanger, and wherein at least a portion of the refrigerating fluid is directed to the intermediate exchanger. Thanks to the invention, the high cooling power provided by the refrigerating system of the refrigerated compartment is used to refresh the cabin by directing the refrigerating fluid, which can be liquid or gas, to the cabin. Once the cabin has been refreshed thanks to this fluid, the refrigerating fluid can be driven outside the vehicle.

According to further aspects of the invention which are advantageous but not compulsory, such a truck may incorporate one or several of the following features:
- at least a portion of the refrigerating fluid is blown directly into the driver cabin;
- the heat transfer circuit circulates a fluid which does not undergo any phase change;
- the cabin air cooling exchanger is associated to a ventilation system of the cabin comprising several spaced apart air outlets;
- the cabin air cooling exchanger is associated to a ventilation system which is at least partly installed in or under a dashboard of the truck;
- the cabin air cooling exchanger is associated to an auxiliary ventilation system installed in a living space of the cabin and adapted to ventilate said living space;
- the truck comprises a cabin dedicated air conditioning system adapted to cool an airflow directed to the cabin; and/or
- the cabin air conditioning system comprises an evaporator, and wherein the cabin air cooling exchanger and said evaporator are associated to a same ventilating system.

### BRIEF DESCRIPTION OF THE DRAWINGS

The invention will now be explained in correspondence with the annexed figures and as an illustrative example, without restricting the object of the invention. In the annexed figures:

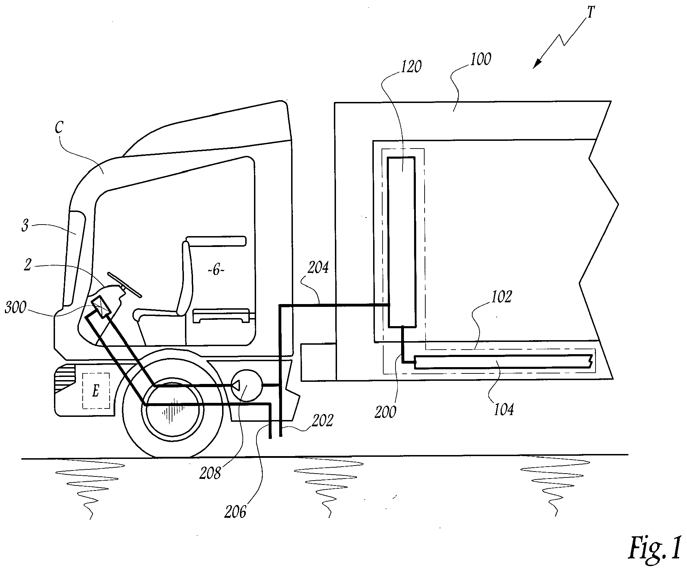

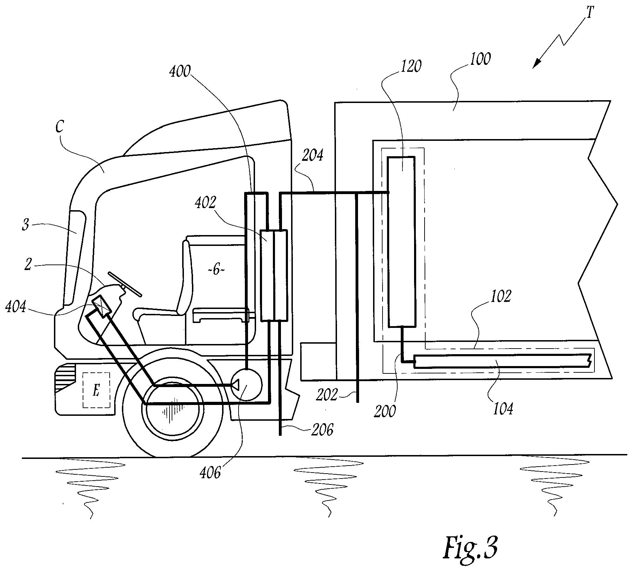

figures 1, 2, 4 and 5 are schematic views of trucks according respectively to embodiments which are not part of the invention, and figure 3 is a schematic view of truck according to an embodiment of the invention.

### DETAILED DESCRIPTION OF SOME EMBODIMENTS

As represented on figures 1 to 3, a truck T may comprise a cabin C comprising a dashboard 2 located on the front of the cabin, substantially beneath the windshield 3, a driver seat 4, and a living space 6 located behind the driver seat, where a bed can be installed. Under cabin C, truck T comprises a chassis frame on which are mounted, *inter alia,* the wheels, and an internal combustion engine E.

Truck T is equipped with a refrigerated compartment 100. Compartment 100 can be integrated onto truck T or can be part of a trailer or a semi-trailer driven by truck T. Preferably, the compartment is entirely separate from the cabin so that no air may pass from one to the other of these volumes. For example, the compartment 100 is for carrying goods which need to be kept below a certain temperature. Refrigerated compartment 100 is equipped with a refrigerating system 102 adapted to keep a desired temperature in refrigerated compartment 100.

Refrigeration system 102 uses the expansion and circulation of a pre-compressed refrigerating fluid, which may be nitrogen, carbon dioxide or another type of refrigerating fluid. The compressed refrigerating fluid is stored at high pressure in a tank 104 belonging to the refrigerating system 102 and is directed, via a refrigerating fluid circuit 200, to a heat exchanger 120 inside refrigerated compartment 4. Air may be driven into refrigerated compartment 100 and blown onto compartment heat exchanger 120 so as to be cooled and to refresh refrigerated compartment 100 to the desired temperature. In such a system, the refrigerating fluid is compressed off-board the vehicle. The tank is therefore refilled when needed with high pressure refrigerating fluid. Alternatively, the tank may be designed to be easily removable from the vehicle so as to allow for an easy replacement of an empty tank with a full tank. The refrigerated compartment 100 may comprise several sub-compartments and/or the compartment heat exchanger 120 may be split into several exchanger units arranged in series and/or in parallel with respect to the flow of refrigerating fluid.

Once refrigerating fluid has passed in compartment exchanger 120, it is normally ejected outside truck T. In other words, the refrigerating fluid does not circulate in a closed loop circuit and is not submitted to successive compression and expansion operations. This allows sparing energy accordingly, given the fact that compressed refrigerating fluids, such as nitrogen, can be produced with less energy consumption if produced off-board the vehicle.

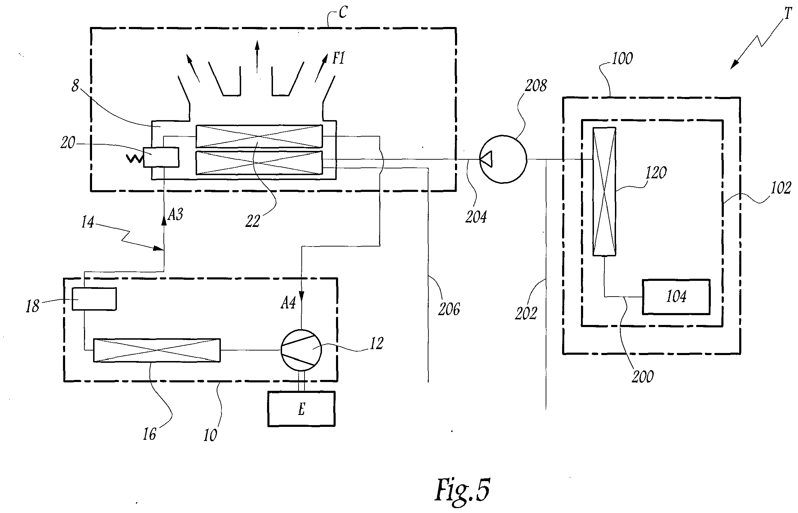

As refrigerating system 102 is commonly oversized so as to provide the desired temperature in refrigerated compartment 100 at any time, the energy needed to control the temperature in cabin C is substantially low with respect to the energy needs of refrigerating system 102. Therefore, instead of being directly evacuated outside truck T via an evacuation duct 202, at least a portion of the refrigerating fluid is preferably driven to the driver cabin (C) for performing air conditioning, i.e. for reducing the temperature of the air inside the cabin. Preferably, the refrigerating fluid is directed to a heat exchanger 300 located in cabin C, via a duct 204 connecting refrigerating system 102 to cabin C. The evacuation duct 202 is preferably equipped with a non-shown valve to control the amount of refrigerating fluid to be evacuated to the atmosphere before being directed to the cabin. If the truck is not a rigid truck to which the storage compartment 100 equipped with refrigerating system 102 is permanently attached, for example a tractor able to tow semitrailers, then the duct 204 is preferably formed of two parts connected by a connector, preferably of the quick coupling type. Circulation of refrigerating fluid in circuit 200 towards exchanger 300 can be performed by a pump 208, but could, in some designs, derive merely from the pressure of the refrigerating fluid. This allows cooling of the cabin with low energy consumption, and optimizing the cooling potential of the refrigerating fluid. In the first embodiment shown on Figure 1, the heat exchanger 300 is a cabin air cooling exchanger adapted to cool an air flow (F1, F2) directed to the cabin (C). In this case, it is a fluid to air exchanger where the refrigerant fluid may exchange heat with the air flow which is directed to the cabin. The cabin air cooling exchanger 300 is advantageously located beneath the dashboard of truck T and associated with a non represented ventilation system. Such ventilation system can be similar to the ventilation system which will be described below in relation to embodiment shown on Figure 5.

After circulating in heat exchanger 300, the refrigerating fluid can be evacuated outside truck T to the ambient air via a second evacuation duct 206, located downstream of the cabin air cooling exchanger. A non-shown valve can be provided in this evacuation duct 206 to control the flow of fluid through the cabin air cooling exchanger.

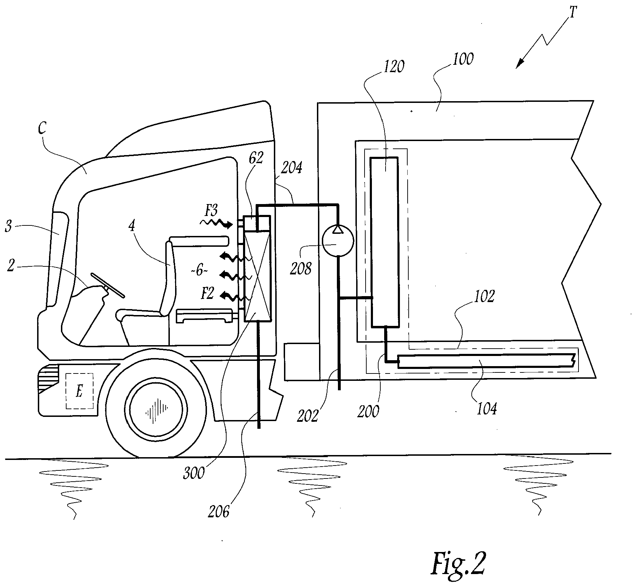

In the second to fifth embodiments represented on figures 2 to 5, parts similar to the ones of figure 1 have the same references. Unless otherwise specified, they operate as in the first embodiment.

According to the second embodiment which is not part of the invention represented on figure 2, the heat exchanger 300 to which the refrigerant fluid is directed is also a cabin air cooling exchanger adapted to cool an air flow (F1, F2) directed to the cabin (C). It is therefore a fluid to air exchanger where the refrigerant fluid may exchange heat with the air flow which is directed to the cabin. In this embodiment, the heat exchanger to which the refrigerant fluid is directed is located in the living space of the cabin, for example in a rear part of the cabin, for example along a rear wall of the cabin. The heat exchanger to which the refrigerant fluid is directed is preferably associated with a ventilation system 62 adapted to extract air from cabin C and/or from the exterior of the cabin, as shown by arrows F3, and to blow an air flow F2 in living space 6. This provides the driver with comfortable resting conditions. Thanks to heat exchanger 300, when the driver rests or sleeps in living space 6, in a period when internal combustion engine E is shut down, temperature in living space 6 may be kept at a comfortable level.

In the third embodiment of the invention represented on figure 3, truck T comprises a heat transfer fluid circuit 400 dedicated to cabin C. Circuit 400 may circulate a heat transfer fluid between a cabin air cooling exchanger 404 and an intermediate exchanger 402, and at least a portion of the refrigerating fluid is directed to the intermediate exchanger 402. The heat transfer fluid is preferably a liquid, for example water, a water based liquid or a glycol based liquid. In the heat transfer circuit, the heat transfer fluid preferably does not undergo any phase change. In the previously stated examples, the heat transfer fluid remains in liquid phase. The cabin air cooling exchanger 404 is a fluid to air exchanger where the heat transfer fluid can exchange heat with the air flow which is to be directed to the cabin. The intermediate exchanger 402 is a fluid to fluid heat exchanger where the heat transfer fluid can exchange heat with the refrigerating fluid. In practice, the heat transfer fluid is cooled down by the refrigerating fluid in the intermediate exchanger 402, and in turn cools down the cabin air in the cabin air cooling exchanger 404. The cabin air cooling exchanger 404 may be associated with a non represented ventilating system beneath the dashboard 2 of the truck. The circulation of heat transfer fluid in circuit 400 can be performed by a pump 406.

The cabin air conditioning systems described above, making optimal use of the refrigerating fluid which is used for the storage compartment refrigerating system 102, is very advantageous as it does use any energy from the truck, apart potentially for the very small consumption of pumps 208, 406. Nevertheless, is some cases, it may be desirable to equip the cabin also with a conventional cabin air conditioning system. For example, if the truck is a tractor adapted to tow trailers or semi-trailer, the tractor may at some times be operated without such trailer or semi-trailer, or may be towing a trailer or semi-trailer which is not equipped with an open loop refrigerating system. In such cases, it may be advantageous to provide a conventional closed loop cabin air conditioning system powered by the truck.

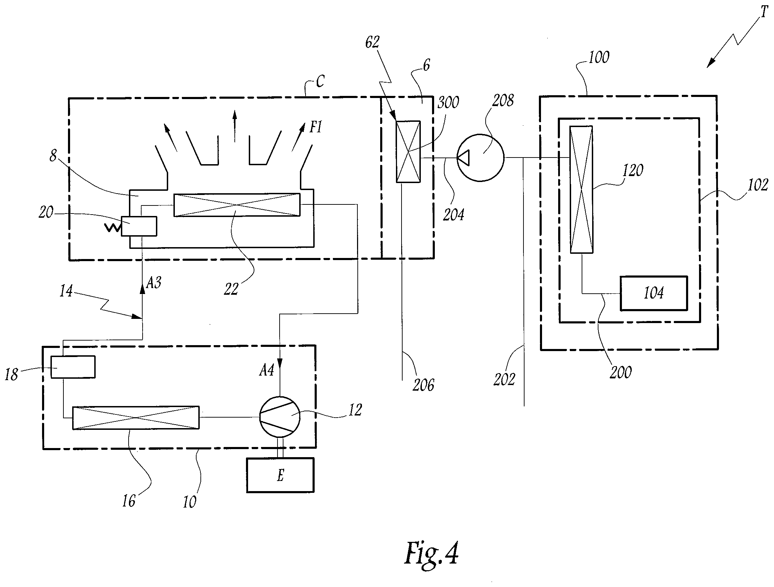

In the fourth embodiment which is not part of the invention represented on figure 4, truck T comprises a heat exchanger 300 located in the living space 6 of the cabin C, as in the second embodiment. In addition, truck T is equipped with an air conditioning system 10 dedicated to cabin C and independent from the compartment refrigerating system 102, for more specifically providing cooled air to a driver area which can be defined as the area substantially comprised between the dashboard, the windshield and the driving/passenger seat of cabin C. Air conditioning system 10 may be powered by internal combustion engine E, as shown, or by another source of power such as an electric motor. Air conditioning system 10 may be based on a vapour compression cycle and may therefore comprise a refrigerating circuit 14 comprising a compressor 12 driven by engine E, a condenser 16, a receiver-dryer 18, an expander 20 and an evaporator 22. The refrigerating fluid which circulates in circuit 14 can be for example conventional R134a refrigerant or CO2. This refrigerating fluid circulates in closed loop in circuit 14, as shown by arrows A3 and A4, and undergoes phase changes. Arrow A3 represents refrigerating fluid flow from condenser 16 to evaporator 22. Arrow A4 represents refrigerating fluid flow from evaporator 22 to condenser 16. Evaporator 22 is adapted to cool air flow F1 which is to be directed to the driver area of cabin C and it can be associated to a ventilation system 8 of cabin C, for example by being integrated within an air duct of the ventilation system.

Ventilation system 8 preferably comprises, like in most vehicles, several spaced apart air outlets located at different places in cabin C to diffuse a ventilated air flow F1 more predominantly at different zones for performing a specific function, like defogging of the windscreen or of lateral windows, and/or for a better comfort of the driver and passengers, such as for directing air towards the feet of the driver/passenger. In most cases, the ventilation system is installed at least partly in or under the dashboard 2.

Ventilation system 8 typically comprises one or several air ducts for feeding the air outlets, and a blower for forcing an air flow through the system, possibly at different speeds. The ventilation system also preferably comprises an air distribution control system for selectively controlling which outlets or group of outlets are fed with the air flow.

Ventilation system 8 can be controlled by the driver thanks to a non represented control device located on dashboard 2, adapted to communicate with an electronic control unit, which may be adapted to implement automatic or semi-automatic control of the system for example in terms of temperature or speed of the air flow, or in terms of selection of the outlets.

The ventilation system 8 can in most cases take air from outside the vehicle in order to bring in fresh air to the cabin, but it can also, as part of its distribution system, comprise means to cause air recycling where air is aspirated from the cabin to be redirected to the cabin through one or several of the outlets. In most cases, the ventilation system can be associated with a heater for heating the flow of air, or at least part of it, which is directed to the cabin through the ventilation system. The heater can be an electric resistor or can be a heat exchanger where the air flow F1 exchanges heat with the cooling liquid of an engine cooling circuit. Such heater is not represented in the drawings, but it could for example be integrated within a duct of the ventilation system 8.

Apart from that, this fourth embodiment works in the same way as the second embodiment, in particular for what concerns feeding of heat exchanger 300 with refrigerating fluid.

According to the fifth embodiment which is not part of the invention represented on figure 5, truck T may be equipped with both a dedicated cabin air conditioning system 10 as described in relation to the fourth embodiment, and with a cabin air cooling exchanger 300 connected to the refrigerating circuit 200 as described in relation to Figure 1, with the cabin air cooling exchanger 300 and the evaporator 22 of the dedicated cabin air conditioning system being associated to the same ventilation system 8. The common ventilation system is preferably at least partly installed in or under dashboard 2 as described in relation to embodiment 4. In this embodiment, the cabin ventilation system 8 can deliver cooled air which may be cooled either by evaporator 22, or by cabin air cooling exchanger 300, or by both of these devices, depending on the operating states of the vehicle. Therefore, in all circumstances, cabin C can be cooled and the cooled air is delivered through ventilation system 8 which achieves an optimal distribution in the driver area of the cabin for optimum comfort. It can be noted that, when both the evaporator 22 and the cabin air cooling exchanger 300 deliver cold, the cooling effects are added, which can be an advantage in case of very warm weather.

Apart from that, this fifth embodiment works in the same way as the first embodiment, in particular for what concerns feeding of cabin air cooling exchanger 300 with refrigerating fluid.

Using the circulation of the refrigerating fluid to cool the cabin can avoid the activation of the engine-powered air conditioning system when the engine is idle. It also can avoid keeping the engine running only for performing air conditioning when the vehicle is stopped and can therefore reduce the fuel consumption of truck T.

According to a non-shown embodiment of the invention, preferably when the refrigerating fluid is air, the refrigerating fluid may be blown directly into the cabin for performing air conditioning, rather than being directed to a heat exchanger. In such a case, the refrigerating fluid becomes mixed with the air inside the cabin.

In any case, the totality of the compressed refrigerating fluid which has circulated in exchanger 120, or only part thereof, may be directed to cabin C.

## Claims

1. A truck (T) comprising a driver cabin (C) having a cabin air cooling exchanger ( 404) adapted to cool an air flow (F1, F2) directed to the cabin (C), and comprising a refrigerated compartment equipped with a dedicated open loop refrigerating system (102), wherein the open loop refrigerating system comprises a compressed refrigerating fluid tank (104), means (200) to direct the compressed refrigerating fluid to a compartment heat exchanger (120) inside the refrigerating compartment (100) and an outlet to ambient air for releasing the refrigerant fluid, wherein the truck (T) further comprises means (204, 208) to direct at least a portion of the refrigerating fluid which has circulated in the compartment heat exchanger (120) to the driver cabin (C) for performing air conditioning, before the refrigerating fluid gets released (206) to the ambient air,
wherein the cabin (C) comprises a heat transfer circuit (400) circulating a heat transfer fluid between the cabin air cooling exchanger (404) and an intermediate exchanger (402), and
wherein at least a portion of the refrigerating fluid is directed to the intermediate exchanger (402).

2. Truck according to claim 1, wherein at least a portion of the refrigerating fluid is blown directly into the driver cabin (C).

3. Truck according to claim 1 or 2, wherein the intermediate exchanger (402) is located in the driver cabin (C).

4. Truck according to claim 1 or 3, wherein the heat transfer circuit (400) circulates a fluid which does not undergo any phase change.

5. Truck according to any preceding claim, wherein the cabin air cooling exchanger (404) is associated to a ventilation system (62, 8) of the cabin (C) comprising several spaced apart air outlets.

6. Truck according to any preceding claims, wherein the cabin air cooling exchanger (404) is associated to a ventilation system (8) which is at least partly installed in or under a dashboard (2) of the truck (T).

7. Truck according to any preceding claims, wherein the cabin air cooling exchanger (404) is associated to an auxiliary ventilation system (62) installed in a living space (6) of the cabin (C) and adapted to ventilate said living space (6).

8. Truck according to any one of the previous claims, wherein it comprises a cabin dedicated air conditioning system (10) adapted to cool an airflow (F1) directed to the cabin (C).

9. Truck according to claim 8, wherein the cabin air conditioning system (10) comprises an evaporator (22), and wherein the cabin air cooling exchanger (404) and said evaporator (22) are associated to a same ventilating system (8).

## Patentansprüche

1. Lastwagen (T) umfassend eine Fahrerkabine (C), die einen Kabinenluftkühltauscher (404) aufweist, der daran angepasst ist, einen zu der Kabine (C) gerichteten Luftstrom (F1, F2) zu kühlen, und umfassend einen gekühlten Raum, der mit einem ihm zugeordneten Offenkreis-Kühlsystem (102) ausgestattet ist, wobei das Offenkreis-Kühlsystem einen Druckkühlfluidtank (104), eine Einrichtung (200) zum Richten des Druckkühlfluids zu einem Raumwärmetauscher (120) innerhalb des gekühlten Raums (100) und einen Auslass zur Umgebungsluft zum Freigeben des Kühlfluids umfasst, wobei der Lastwagen (T) ferner Einrichtungen (204, 208) zum Richten wenigstens eines Teils des Kühlfluids, das in dem Raumwärmetauscher (120) zirkuliert ist, zu der Fahrerkabine (C) umfasst, um eine Klimatisierung durchzuführen, bevor das Kühlfluid an die Umgebungsluft freigegeben wird (206),
wobei die Kabine (C) einen Wärmeübertragungskreis (400) umfasst, der ein Wärmeübertragungsfluid zwischen dem Kabinenluftkühltauscher (404) und einem Zwischentauscher (402) zirkuliert, und
wobei wenigstens ein Teil des Kühlfluids zu dem Zwischentauscher (402) gerichtet ist.

2. Lastwagen nach Anspruch 1, wobei wenigstens ein Teil des Kühlfluids direkt in die Fahrerkabine (C) geblasen wird.

3. Lastwagen nach Anspruch 1 oder 2, wobei der Zwischentauscher (402) sich in der Fahrerkabine (C) befindet.

4. Lastwagen nach Anspruch 1 oder 3, wobei der Wärmeübertragungskreis (400) ein Fluid zirkulieren lässt, das keine Phasenänderung erfährt.

5. Lastwagen nach einem vorhergehenden Anspruch, wobei der Kabinenluftkühltauscher (404) mit einem Ventilationssystem (62, 8) der Kabine (C) in Verbindung steht, das mehrere beabstandete Luftauslässe umfasst.

6. Lastwagen nach vorhergehenden Ansprüchen, wobei der Kabinenluftkühltauscher (404) mit einem Ventilationssystem (8) in Verbindung steht, das wenigstens teilweise in oder unter einem Armaturenbrett (2) eines Lastwagens (T) installiert ist.

7. Lastwagen nach vorhergehenden Ansprüchen, wobei der Kabinenluftkühltauscher (404) mit einem Hilfsventilationssystem (62) in Verbindung steht, das in einem Aufenthaltsraum (6) der Kabine (C) installiert und daran angepasst ist, den Aufenthaltsraum (6) zu lüften.

8. Lastwagen nach einem der vorhergehenden Ansprüche, wobei er ein der Kabine zugeordnetes Klimatisierungssystem (10) umfasst, das daran angepasst ist, einen Luftstrom (F1) zu kühlen, der zu der Kabine (C) gerichtet ist.

9. Lastwagen nach Anspruch 8, wobei das Kabinen-Klimatisierungssystem (10) einen Verdampfer (22) umfasst, und wobei der Kabinenluftkühltauscher (404) und der Verdampfer (22) mit dem gleichen Ventilationssystem (8) in Verbindung stehen.

## Revendications

1. Camion (T) comprenant une cabine de conducteur (C) comprenant un échangeur de refroidissement d'air de cabine (404) adapté pour refroidir un écoulement d'air (F1, F2) dirigé vers la cabine (C), et comprenant un compartiment réfrigéré équipé d'un système de réfrigération en boucle ouverte dédié (102), dans lequel le système de réfrigération en boucle ouverte comprend un réservoir de fluide de réfrigération comprimé (104), des moyens (200) pour diriger le fluide de réfrigération comprimé vers un échangeur de chaleur de compartiment (120) à l'intérieur du compartiment de réfrigération (100) et une sortie vers l'air ambiant qui permet d'évacuer le fluide réfrigérant, dans lequel le camion (T) comprend en outre des moyens (204, 208) pour diriger au moins une partie du fluide réfrigérant qui a circulé dans l'échangeur de chaleur de compartiment (120) vers la cabine de conducteur (C) afin de réaliser la climatisation, avant que le fluide réfrigérant soit évacué (206) dans l'air ambiant,
dans lequel la cabine (C) comprend un circuit de transfert de chaleur (400) faisant circuler un fluide de transfert de chaleur entre l'échangeur de refroidissement d'air de cabine (404) et un échangeur intermédiaire (402), et
dans lequel au moins une partie du fluide réfrigérant est dirigée vers l'échangeur intermédiaire (402).

2. Camion selon la revendication 1, dans lequel au moins une partie du fluide réfrigérant est soufflée directement dans la cabine de conducteur (C).

3. Camion selon la revendication 1 ou 2, dans lequel l'échangeur intermédiaire (402) est situé dans la cabine de conducteur (C).

4. Camion selon la revendication 1 ou 3, dans lequel le circuit de transfert de chaleur (400) fait circuler un fluide qui ne subit aucun changement de phase.

5. Camion selon l'une quelconque des revendications précédentes, dans lequel l'échangeur de refroidissement d'air de cabine (404) est associé à un système de ventilation (62, 8) de la cabine (C) qui comporte plusieurs sorties d'air espacées les unes des autres.

6. Camion selon l'une quelconque des revendications précédentes, dans lequel l'échangeur de refroidissement d'air de cabine (404) est associé à un système de ventilation (8) qui est au moins partiellement installé dans ou en dessous d'un tableau de bord (2) du camion (T).

7. Camion selon l'une quelconque des revendications précédentes, dans lequel l'échangeur de refroidissement d'air de cabine (404) est associé à un système de ventilation auxiliaire (62) qui est installé dans un habitacle (6) de la cabine (C) et qui est adapté pour ventiler ledit habitacle (6).

8. Camion selon l'une quelconque des revendications précédentes, dans lequel il comprend un système de climatisation dédié à la cabine (10) qui est adapté pour refroidir un écoulement d'air (F1) dirigé vers la cabine (C).

9. Camion selon la revendication 8, dans lequel le système de climatisation de cabine (10) comprend un évaporateur (22), et dans lequel l'échangeur de refroidissement d'air de cabine (404) et ledit évaporateur (22) sont associés à un même système de ventilation (8).
